# EUROPEAN PATENT APPLICATION

(11) **EP 1 463 280 A2**
(43) Date of publication of application: **29.09.2004**
(21) Application number: 04251746.6
(22) Date of filing: 25.03.2004
(51) Int. Cl.: H04M 1/738

(54) **High availability telephone set with backup line**

(30) Priority: 26.03.2003 GB 0306947
(71) Applicant: Mitel Networks Corporation, Ottawa, Ontario K2K 2W7 (CA)
(72) Inventor: Davies, Jim N., Ontario K7S 3G7 (CA)
(74) Representative: Hedley, Nicholas James Matthew

(57) **Abstract**

A high availability telephone instrument, comprising a primary communications link interface (160) connected to a primary communications link; at least one backup communications link interface (200, 210) connected to at least one backup communications link; and a controller connected to for detecting failure of the primary communications link and in response selecting the at least one backup communications link for providing voice communication between the telephone instrument and the backup communications link.

## Description

### BACKGROUND OF THE INVENTION

### 1. Field of the Invention

The present invention is directed to telephones, and more particularly to a telephone instrument that is connectable to any one of a plurality of different communications systems via multiple separate communications links of different type, to provide a high level of overall availability in the event of a failure in one of the associated communications systems.

### 2. Description of the Related Art

There are many situations requiring failsafe communication via a telephone having only a single communications system/link.

For example, a business that relies on telephone communications for a significant portion of their revenue could be adversely affected by a failure in its communications system.

Another example is a "teleworker", in a remote location, who requires a telephone the t is connected to an office communications system, which may be a significant distance away, but who also needs to be able to make emergency 911 or other local telephone calls.

A further example is a person or organization that provides emergency service (e.g. fire, health, police, security) requiring a highly redundant communications system.

In the past, a person requiring such failsafe communications would need multiple completely separate telephone instruments, where the number of such instruments varies depending on the degree of 'availability' deemed necessary in the particular circumstances. This prior art approach is costly, confusing to the user and often requires excessive desk/wall space to accommodate the multiple separate telephone instruments.

### SUMMARY OF THE INVENTION

It is an aspect of the present invention to provide a high level of overall availability in the event of a communication system failure.

Therefore, according to the invention a telephone instrument is selectively connected to a plurality of communications links of different types (e.g. Ethernet LAN, an analog phone line, ISDN, radio link, etc.) By selectively connecting the telephone instrument to any of a plurality of communications links a high level of availability is provided in the event one or several of the systems fail.

The minimum number of communications links required for increased availability according to the invention is two, whereas the maximum number of communications links is limited only by the economic tradeoff between cost and increasing availability.

These together with other aspects and advantages which will be subsequently apparent, reside in the details of construction and operation as more fully hereinafter described and claimed, reference being had to the accompanying drawings forming a part hereof, wherein like numerals refer to like parts throughout.

### BRIEF DESCRIPTION OF THE DRAWINGS

Figure 1 is a block diagram of a telephone instrument according to the prior art.

Figure 2 is a block diagram of a high availability telephone instrument according to the present invention.

Figure 3 is a block diagram showing a fail-safe link selection mode of operating the high availability telephone instrument of Figure 2.

Figure 4 is a block diagram showing a user-input link selection mode of operating the high availability telephone instrument of Figure 2.

Figure 5 is a block diagram showing a dialed-number link selection mode of operating the high availability telephone instrument of Figure 2.

### DETAILED DESCRIPTION OF THE PREFERRED EMBODIMENTS

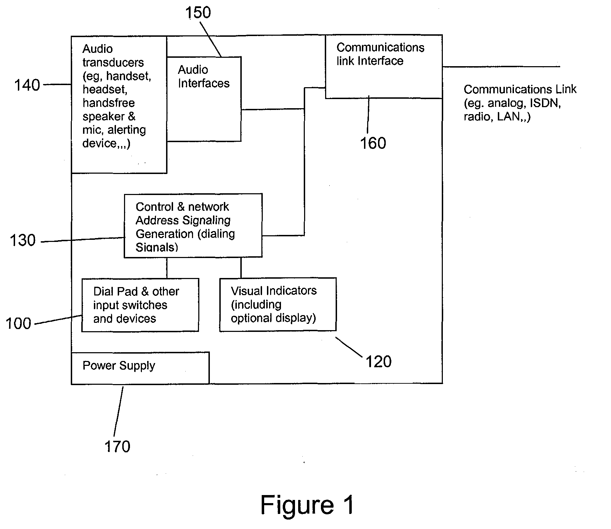

A simplified block diagram of a traditional telephone instrument is shown in Figure 1 to help illustrate the improvements that are the subject of this invention.

The traditional telephone instrument of Figure 1 includes a number of user interfaces such as input devices 100 and visual indicators120 connected to a telephone controller and signaling generator 130, audio transducers 140 and interfaces 150. The controller 130 and audio interfaces 150 are connected to a communications link interface 160 that, in turn, is connected to an external communications link, which can be, for example, an analog connection, ISDN connection, radio connection (cell phone or Bluetooth or 802.11 wireless LAN, etc.), digital Local Area Network (LAN), etc. A power supply 170 provides operating power to the various telephone components. Although not shown, the telephone instrument also includes a hook switch and other well-known mechanical/electrical components for proper operation of the device.

As discussed above, in the event of a communications link failure the telephone instrument user is no longer able to communicate. In some circumstances or applications, failure to communicate is not tolerable.

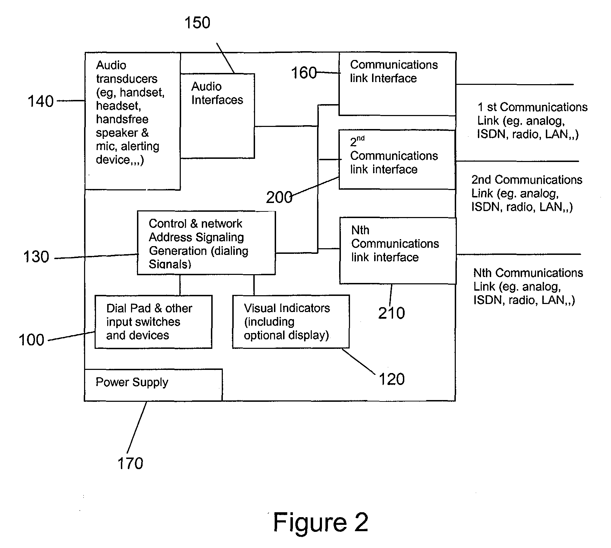

A simplified block diagram of a high availability telephone according to the present invention is shown in Figure 2. It will be noted that the telephone instrument of Figure 2 incorporates the same user interfaces and a first or primary communications link interface 160 as the prior art device of Figure 1, but additionally includes at least one additional (i.e. secondary) communications link interface 200 (up to N such interfaces 210 being shown).

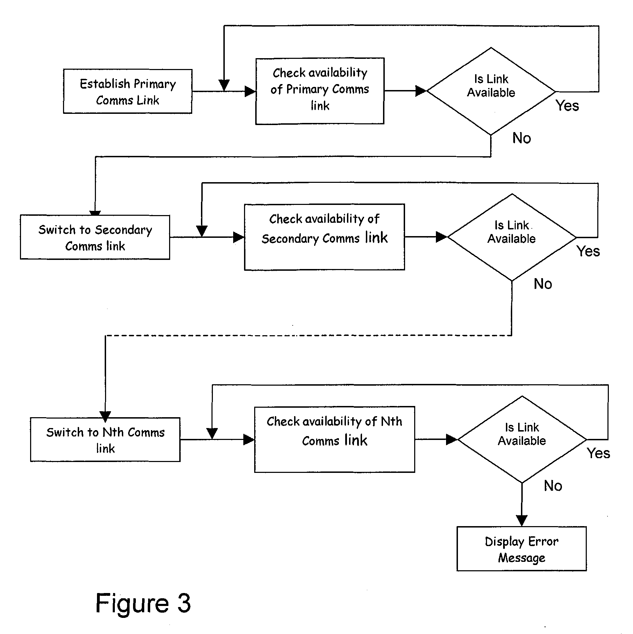

In operation, one of the communications links (e.g. the 1^{st} link) is set as the default primary link. Failure of the primary link is detected by the associated communications link interface 160 in a well-known manner, such as by detecting the absence of a signal normally present on the link. For example, if the primary communications link is an analog telephone line then the interface 160 detects failure of the line due to a loss of battery voltage. Similarly, if the link is a radio connection then failure is detected based on loss of the carrier signal, or if the link is a LAN connection then loss of 'link' status or loss of a higher layer protocol signal indicates a link failure. Failure of the link is reported to the controller 130 that, in turn, switches communication to the first backup link (e.g. communications link interface 200 to a radio link is enabled). Likewise, in the event of a failure of the backup link, any additional backup links are switched in. A detailed flow chart of the operation of controller 130 in this operating mode, is set forth in Figure 3.

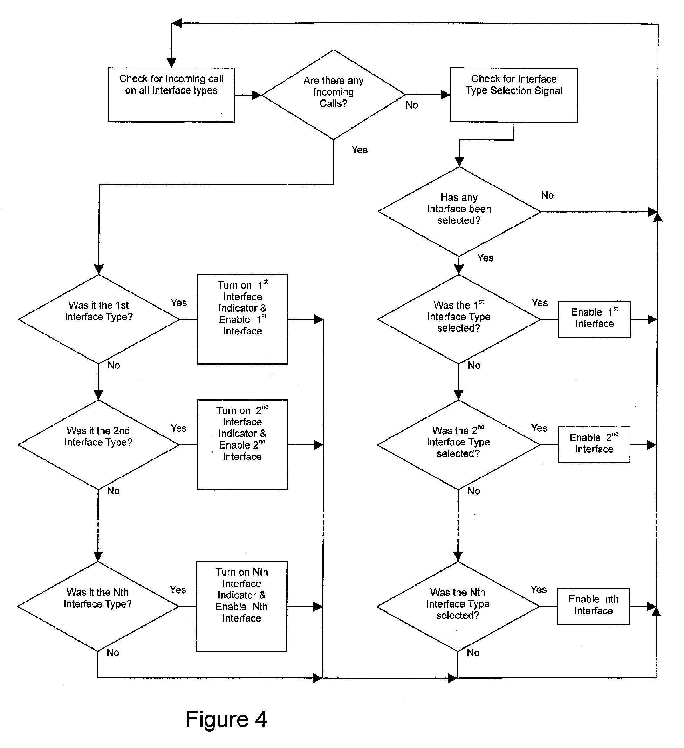

As an alternative to the automatic link selection discussed above, it is contemplated that the telephone instrument may be provided with user input selection (e.g. similar to a key telephone set) for selecting which of a plurality of different types of communications links is to be used for a particular call. An incoming call on any of the communications links is sensed by the associated interface in the usual manner, for the particular type of link, and an indication of the specific link is provided to the user via indicators 120 (e.g. similar to a key button). The user then answers the call on that link if desired. A detailed flow chart of the operation of controller 130 in this operating mode, is set forth in Figure 4.

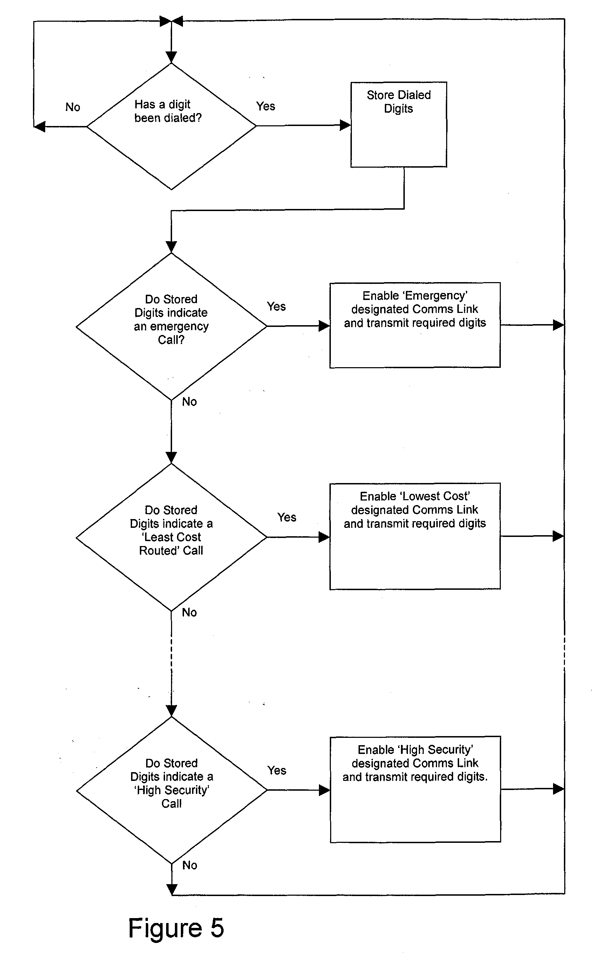

According to another alternative operating mode, the controller 130 select an appropriate communications link based on decoding the number dialed by the user and comparing it to a predefined routing criteria (e.g. E911, least cost call routing, or different levels of routing security). For example, recognition of an emergency number (e.g. 911) always activates the 2^{nd} interface/link, recognition of calls to a certain area code activates the 1^{st} interface/link for a lower cost routing, or calls to a specific number always use the 3^{rd} interface/link for higher level of security. A detailed flow chart of the operation of controller 130 in this operating mode, is set forth in Figure 5.

The many features and advantages of the invention are apparent from the detailed specification and, thus, it is intended by the appended claims to cover all such features and advantages of the invention that fall within the true spirit and scope of the invention. Further, since numerous modifications and changes will readily occur to those skilled in the art, it is not desired to limit the invention to the exact construction and operation illustrated and described, and accordingly all suitable modifications and equivalents may be resorted to, falling within the scope of the invention.

## Claims

1. A high availability telephone instrument, comprising:
a primary communications link interface connected to a primary communications link;
at least one backup communications link interface connected to at least one backup communications link; and
a controller connected to said primary communications link interface and at least one backup communications link interface for detecting a predetermined call condition and in response selecting said at least one backup communications link for providing voice communication between said telephone instrument and said backup communications link.

2. The high availability telephone instrument of claim 1, wherein said call condition is failure of said primary communications link.

3. The high availability telephone instrument of claim 1, wherein said primary and at least one backup communications links are selected from the group comprising analog and digital communications links.

4. The high availability telephone instrument of claim 3, wherein said analog communications links are selected from the group comprising analog telephone lines and radio links.

5. The high availability telephone instrument of claim 3, wherein said digital communications links are selected from the group comprising LAN connections, ISDN lines and radio links.

6. The high availability telephone instrument of claim 2, wherein said call condition is user selection of said at least one backup communications link.

7. The high availability telephone instrument of claim 2, wherein said call condition is decoding and comparison of a predetermined user dialed number to a predefined routing criteria.
